# EUROPEAN PATENT SPECIFICATION

(11) **EP 4 376 116 B1**
(45) Date of publication and mention of the grant of the patent: **08.07.2026**
(21) Application number: 22944065.6
(22) Date of filing: 29.12.2022
(51) Int. Cl.: H01M 4/133, H01M 4/1393, H01M 4/587, H01M 4/583, H01M 10/0525, H01M 10/0587, H01M 50/213, H01M 10/28, H01M 4/02

(54) **NEGATIVE ELECTRODE POLE PIECE, BATTERY, BATTERY PACK, AND ELECTRICAL DEVICE**
NEGATIVELEKTRODENPLATTE, BATTERIE, BATTERIEPACK UND ELEKTRISCHE VORRICHTUNG
PIÈCE POLAIRE D'ÉLECTRODE NÉGATIVE, BATTERIE, BLOC-BATTERIE ET DISPOSITIF ÉLECTRIQUE

(30) Priority: 27.09.2022 CN 202211186765
(43) Date of publication of application: 29.05.2024
(73) Proprietor: Hithium Tech HK Limited, Hong Kong (HK)
(72) Inventor: LIN, Yingxin, Xiamen, Fujian 361100 (CN); SHEN, Liuxue, Xiamen, Fujian 361100 (CN); WEN, Jiaqi, Xiamen, Fujian 361100 (CN); ZHANG, Min, Xiamen, Fujian 361100 (CN)
(74) Representative: DREISS Patentanwälte PartG mbB
(86) International application number: PCT/CN2022/143192
(87) International publication number: WO 2024/066106

(56) References cited:
- CN-A- 109 728 300
- CN-A- 114 080 703
- CN-A- 114 464 774
- CN-A- 114 464 774
- CN-A- 115 440 933
- JP-A- 2015 187 926
- US-A1- 2013 089 784

## Description

### TECHNICAL FIELD

The present disclosure relates to the technical field of batteries, and in particular, to a negative electrode plate, a battery, and an electrical device.

### BACKGROUND

Hard carbon materials are a type of carbon materials obtained by high-temperature pyrolysis of polymer precursors. The hard carbon materials have the relatively large interlayer spacing, a rich disordered structure, and a long charge-discharge cycle life, and thus they are considered a very promising negative material for batteries. However, the hard carbon materials still suffer from low first-cycle discharge efficiency, poor cycle stability, and poor rate characteristics, hindering development of the hard carbon materials as negative materials for batteries.

At present, methods such as doping other atoms in the hard carbon materials, using highly graphitized soft carbon to cover some of holes in hard carbon, and designing hard carbon materials with many defects are commonly used to improve the shortcomings of the hard carbon materials as negative materials for batteries. JP2015187926A discloses a lithium secondary battery including a nonaqueous electrolyte containing a negative electrode active material such as a carbonaceous material. CN114464774A discloses a negative pole material layer comprising a carbon-based material comprising a primary granular carbon material, a secondary granular carbon material and a carbon coating layer coating the surface of the secondary granular carbon material. However, these solutions are difficult to simultaneously meet the electrochemical performance requirements of batteries for high energy density and high first-cycle discharge efficiency.

### SUMMARY

In view of the above, the present disclosure provides a negative electrode plate containing two kinds of hard carbon particles with different defect values. The negative electrode plate combines the excellent properties of the two kinds of hard carbon particles, such that the negative electrode plate has excellent properties and meet the requirements of a battery such as high energy density, high first-cycle discharge efficiency, and excellent rate performance.

The present disclosure provides a negative electrode plate including a negative current collector and a negative material layer disposed on a surface of the negative current collector. The negative material layer includes a hard carbon material, the hard carbon material contains primary particles and secondary particles, and the primary particles have a defect value different from a defect value of the secondary particles. The defect value of the primary particles is G1, G1 satisfying G1=ID1/(ID1+1G1). ID1 represents an intensity of D peak at a wavelength of 1350 cm⁻¹ indicating a defect of carbon atom lattice in a Raman spectrum of the primary particles. IG1 represents an intensity of G peak at a wavelength of 1585 cm⁻¹ indicating an in-plane stretching vibration of sp2 hybridization of carbon atom in a Raman spectrum of the primary particles. The defect value of the secondary particles is G2, G2 satisfying G2=ID2/(ID2+IG2). ID2 represents an intensity of D peak at a wavelength of 1350 cm⁻¹ indicating a defect of carbon atom lattice in a Raman spectrum of the secondary particles. IG2 represents an intensity of G peak at a wavelength of 1585 cm⁻¹ indicating an in-plane stretching vibration of sp2 hybridization of carbon atom in a Raman spectrum of the secondary particle. G1 and G2 satisfy 0.04≤|G1-G2|≤0.2. The defect value G1 of the primary particles is in a range of 0.5 to 0.8. The defect value G2 of the secondary particles is in the range of 0.5 to 0.8. A specific surface area SSA of the hard carbon material satisfies 1.3 m²·g⁻¹≤SSA≤6 m²·g⁻¹, measured by a gas adsorption BET method according to GB/T 19587-2017/ISO 9277:2010.

The negative electrode plate of the embodiments of the present disclosure includes the negative current collector and the negative material layer. The negative material layer includes the hard carbon material. The hard carbon material contains the primary particles and the secondary particles, and the defect value of the primary particles is different from the defect value of the secondary particles. Hard carbon particles with a larger defect value have more active sites, increasing the storage sites of active ions so that the battery has higher energy density and rate performance. Hard carbon particles with a smaller defect value have fewer active sites, reducing the side reactions between the negative electrode plate and the electrolytic solution, thereby improving the first-cycle discharge efficiency of the battery. Compared with the solution of using one kind of hard carbon particles with the same defect value as the negative material layer, the negative electrode plate provided in the embodiments of the present disclosure improves the performance of the hard carbon material by compounding the hard carbon particles having the larger defect value with the hard carbon particles having the smaller defect value. In this way, the negative electrode plate has good performance and meets the performance requirements of the battery, such as high energy density and high first-cycle discharge efficiency, and improves the dynamic performance and cycling performance of the battery. When the defect value G1 of the primary particles and the defect value G2 of the secondary particles satisfy 0.04≤|G1-G2|≤0.2, the primary particles and the secondary particles have different advantages due to different defect values. The hard carbon particles with a relatively large defect value can improve the energy density of the battery. The hard carbon particles with a relatively small defect value can improve the first-cycle discharge efficiency of the battery 20. This facilitates the debugging of the parameters of the overall structure of the negative material layer, such that the negative material layer has better performance. When the numerical value of the specific surface area, SSA, of the hard carbon material satisfies 1.3 m²·g⁻¹≤SSA≤6 m²·g⁻¹, the numerical value of the specific surface area of the hard carbon material is in a reasonable range. The specific surface area of the hard carbon material is sized to enable the hard carbon material to have a sufficient contact area with the electrolytic solution, facilitating the transport of active ions, and improving the rate performance and energy density of the battery. Furthermore, the value of the specific surface area of the hard carbon material results that the side reactions between the negative electrode plate and the electrolytic solution are not excessive enough to affect the first-cycle discharge efficiency of the battery. The negative electrode plate has better performance, which can simultaneously satisfy the requirements of the battery for high first-cycle efficiency, high energy density, and high rate performance.

The defect value G1 of the primary particles and the defect value G2 of the secondary particles are regulated within a reasonable range such that the negative electrode plate has a moderate defect, thereby enabling the negative material layer to have more active sites and fewer side reactions with the electrolytic solution, and improving the energy density and cycle stability of the battery while improving the first-cycle discharge efficiency.

Further, a number content N of the primary particles in the negative material layer is in a value range of 0.1 to 0.9. The number content N is calculated based on N=n1/(n1+n2). by counting the number n1 of the primary particles and the number n2 of the secondary particles in a scanning electron micrograph of the hard carbon material. When the number content N of the primary particles in the negative material layer satisfies 0.1 ≤N≤ 0.9, the ratio of the primary particles to the secondary particles in the negative material layer is in a reasonable range, such that the negative material layer has both sufficient hard carbon particles with a larger defect value and sufficient hard carbon particles with a smaller defect value. The particles with the larger defect value can provide more active sites for the negative material layer, thereby improving the energy density of the battery. The particles with the smaller defect value can reduce the side reactions between the negative material layer and the electrolytic solution, thereby improving the first-cycle discharge efficiency of the battery. In this way, the negative electrode plate can meet the requirements of high energy density and high first-cycle discharge efficiency of the battery.

Further, a porosity P of the negative material layer is in a value range of 0.32 to 0.4, measured by a mercury intrusion method according to GB/T 21650.1-2008/ISO 15901-1, 2005. When the porosity P of the negative material layer satisfies 0.32 ≤P≤ 0.4, the porosity P of the negative material layer is in a reasonable range, improving the wetting performance and liquid retention capacity of the electrolytic solution in the negative electrode plate, reducing the transport resistance of active ions, and facilitating the transport of active ions. The negative electrode plate has higher rate performance, prolonging the cycle life of the negative electrode plate.

Further, a performance factor h of the negative electrode plate satisfies a relationship of h=[N×G1+(1-N)×G2]×SSA×P, where 0.2 ≤ h ≤ 1.8. N is a number content of the primary particles in the negative material layer. The number content N is calculated based on N=n1/(n1+n2) by counting the number n1 of the primary particles and the number n2 of the secondary particles in a scanning electron micrograph of the hard carbon material. P is a porosity of the negative material layer, measured by a mercury intrusion method according to GB/T 21650.1-2008/ISO 15901-1, 2005. The structural parameters of the entire negative material layer and the structural parameters of the negative electrode plate are controlled to further regulate the performance factor h of the negative electrode plate, such that the primary particles and secondary particles can exert respective advantages, thereby balancing the cycle performance and charge-discharge performance of the battery, while improving the energy density and the first-cycle discharge efficiency of the negative electrode plate. Therefore, the negative electrode plate has better comprehensive performance, higher energy density and rate performance, and good cycle performance and stability.

Further, the primary particle D50 has a particle size R1 in a value range of 4 µm to 12 µm, and the secondary particle D50 has a particle size R2 in a value range of 8 µm to 18 µm, where D50 is a particle size corresponding to a cumulative particle size distribution percentage of 50%. The average particle sizes of the primary particles and the particle sizes of the secondary particles are reasonably controlled, such that the secondary particles facilitate to achieve compact stack with the primary particles, thereby improving the energy density of the battery. In addition, the regulation of the particle sizes of the primary particles and the particle sizes of the secondary particles facilitates the regulation of the porosity of the negative electrode plate, thereby increasing the wettability of the electrolytic solution on the negative electrode plate, increasing the transport speed of active ions, and finally improving the rate performance and prolonging the cycle life of the battery.

Further, a weight of the primary particles is M1 and a weight of the secondary particles is M2, and M1/M2 satisfying 0.03≤M1/M2≤15. When the ratio M1/M2 of the weight M1 of the primary particles to the weight M2 of the secondary particles satisfies 0.03 ≤M1/M2≤ 15, it is advantageous to control the value of the number content N of the primary particles in the negative material layer to satisfy 0.1 ≤N≤ 0.9, such that the number content of the primary particles in the negative material layer is in a reasonable range. In this way, the negative material layer has sufficient active sites and do not have too many side reactions with the electrolytic solution so that the battery including the negative electrode plate has a high energy density and a high first-cycle discharge efficiency.

The present disclosure also provides a battery including an electrolytic solution, a positive electrode plate, a separator, and a negative electrode plate provided herein. The positive electrode plate is at least partially immersed in the electrolytic solution. The separator is located on a side of the positive electrode plate and is at least partially immersed in the electrolytic solution. The negative electrode plate is disposed on a side of the separator facing away from the positive electrode plate and is at least partially immersed in the electrolytic solution. The battery includes the negative electrode plate in the embodiment of the present disclosure. The negative electrode plate improves the overall performance thereof by adjusting the overall structure of the negative material layer, resulting in a battery including the negative electrode plate having high energy density and high first-cycle efficiency.

The present disclosure also provides a battery pack including a case and a plurality of the battery provided herein. The plurality of batteries is accommodated in the case, and is connected in at least one of series connection or parallel connection. The battery pack has a fixing and protecting effect on the batteries. Furthermore, the battery pack has a high energy density and a high first-cycle efficiency, while having high cycle performance and safety performance.

The present disclosure also provides an electrical device including an electrical device body and the battery provided herein. The electrical device body includes a device positive electrode and a device negative electrode. The positive electrode plate of the battery is used to electrically connected to the device positive electrode of the electrical device body, the negative electrode plate of the battery is used to electrically connected to the device negative electrode of the electrical device body, and the battery is used to configured to provide power to the electrical device body. The battery has a high energy density and a high first-cycle efficiency, has high cycle performance and safety performance, and can provide stable and safe electric power for electric devices.

The above negative electrode plate includes the negative current collector and the negative material layer. The negative material layer is a hard carbon material prepared by mixing the primary particles and secondary particles, and the defect value of the primary particles is different from the defect value of said secondary particles. Hard carbon particles with a larger defect value have more active sites, increasing the storage sites of active ions so that the battery has higher energy density and rate performance. Hard carbon particles with a smaller defect value have fewer active sites, reducing the side reactions between the negative electrode plate and the electrolytic solution, thereby improving the first-cycle discharge efficiency of the battery. Compared with the solution of using one kind of hard carbon particles with the same defect value as the negative material layer, the negative electrode plate provided in the embodiments of the present disclosure improves the performance of the hard carbon material by compounding the hard carbon particles having the larger defect value with the hard carbon particles having the smaller defect value. In this way, the negative electrode plate has good performance and meets the performance requirements of the battery, such as high energy density and high first-cycle discharge efficiency, and improves the dynamic performance and cycling performance of the battery.

### BRIEF DESCRIPTION OF DRAWINGS

In order to illustrate the technical solutions of the embodiments of the present disclosure more clearly, a brief description will be given of the accompanying drawings below, which are required to be used in the description of the embodiments. It is obvious that the drawings in the description below are some embodiments of the present disclosure, and it would be obvious for those skilled in the art to obtain other drawings according to these drawings without involving any inventive effort.
FIG. 1 is a structural entity diagram of a negative electrode plate according to an embodiment of the present disclosure.
FIG. 2 is a schematic sectional-structural diagram of a negative electrode plate according to an embodiment of the present disclosure along the direction A-A in FIG. 1.
FIG. 3 is a schematic structural diagram of a battery according to an embodiment of the present disclosure.
FIG. 4 is a schematic perspective diagram of a battery according to an embodiment of the present disclosure.
FIG. 5 is a schematic structural diagram of a battery pack according to an embodiment of the present disclosure.
FIG. 6 is a schematic structural diagram of an electrical device according to an embodiment of the present disclosure.

### REFERENCE SIGNS

1-electrical device; 10-electrical device body; 30-battery pack; 20-battery; 100-negative electrode plate; 110-negative current collector; 130-negative material layer; 200-positive electrode plate; 300- electrolytic solution; 400-separator; 50-case.

### DESCRIPTION OF EMBODIMENTS

The technical solutions in the embodiments of the present disclosure will be described clearly and completely in conjunction with the accompanying drawings in the embodiments of the present disclosure. Obviously, the described embodiments are only part of the embodiments of the present disclosure, rather than all the embodiments. Based on the embodiments in the present disclosure, all the other embodiments obtained by those skilled in the art without manufacturing any inventive effort fall within the scope of the present disclosure.

The terms "first", "second" and the like in the specification and claims, as well as the accompanying drawings of the present disclosure, are used to distinguish different objects, rather than to describe a specific order. Furthermore, the terms "comprise" and "have", as well as any variations thereof, are intended to cover a non-exclusive inclusion. For example, a process, method, system, product or device that includes a series of steps or units is not limited to the listed steps or units, but optionally includes steps or units that are not listed, or optionally includes other steps or units that are inherent to these processes, methods, products, or devices.

Reference herein to "an example" or "an embodiment" means that a particular feature, structure, or characteristic described in connection with the example or embodiment may be included in at least one embodiment of the present disclosure. The phrase in various places in the specification are not necessarily all referring to the same embodiment, nor are separate or alternative embodiments mutually exclusive of other embodiments. It is to be expressly and implicitly understood by those skilled in the art that the embodiments described herein may be combined with other embodiments.

A hard carbon material is a promising negative material for batteries because of its large interlayer spacing, rich disordered structure, and long cycle life. However, hard carbon materials still suffer from low first-cycle discharge efficiency, poor cycle stability, and poor rate characteristics, hindering the development of hard carbon materials as negative materials for batteries.

The following methods can be employed to ameliorate the deficiencies of hard carbon materials as negative materials for batteries. First, a soft carbon having a higher degree of graphitization is used to cover some of holes in the hard carbon. This method can reduce side reactions between the negative electrode plate and the electrolytic solution, and improve the first-cycle discharge efficiency. However, this method reduces the specific surface area of the hard carbon material, the active sites, and the energy density of the battery. Second, the method of doping other atoms in the hard carbon material is used to increase the interlayer distance of the hard carbon material, which improves the energy density and rate performance of the battery. However, the side reactions between the negative electrode plate and the electrolyte increase, reducing the first-cycle discharge efficiency of the battery. Third, a hard carbon material having more defects is designed. Although this method can increase the active sites for storing active ions and improve the energy density and rate capability of the battery, it also leads to increase in the side reactions between the negative electrode plate and the electrolytic solution and decreases the first-cycle discharge efficiency of the battery. Although these solutions can improve the disadvantages of the hard carbon material as a negative material for a battery, they are difficult to meet the performance requirements of the battery, such as a high energy density and a high first-cycle discharge efficiency.

In view of this, an embodiment of the present disclosure provides a negative electrode plate 100 that can be used as the negative electrode plate 100 of a battery 20. The negative electrode plate 100 has excellent performance while satisfying the performance requirements of the battery 20, such as a high energy density and a high first-cycle discharge efficiency.

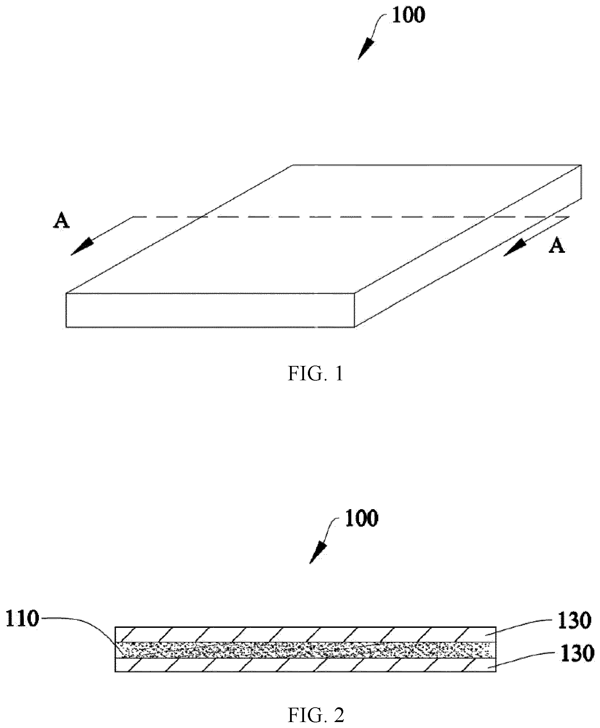

Referring to FIGS. 1 and 2, an embodiment of the present disclosure provides the negative electrode plate 100 including a negative current collector 110 and a negative material layer 130. The negative material layer 130 is provided on a surface of the negative current collector 110. The negative material layer 130 includes a hard carbon material containing primary particles and secondary particles, and the primary particles have a defect value different from that of the secondary particles.

Optionally, the negative current collector 110 includes at least one of copper foil, stainless steel foil, copper alloy foil, carbon-coated copper foil, aluminum foil, or carbon-coated aluminum foil.

The negative material layer 130 is provided on the surface of the negative current collector 110. It is to be understood that the negative material layer 130 is dispose on the entire surface of one surface or part of the one surface of the negative current collector 110, or the negative material layer 130 is disposed on the entire surfaces of two surfaces or part of the two surfaces of the negative current collector 110.

The negative material layer 130 includes the hard carbon material containing the primary particles and the secondary particles. In the embodiments of the present disclosure, the secondary particles refer to a hard carbon material prepared by secondary granulation from the primary particles as an aggregate. The secondary particles have good isotropy and good liquid retention ability, and can provide channels for active ions, reducing the internal resistance of the battery 20. This can further improve the dynamic performance of the battery 20, and improve the first-cycle discharge efficiency and rate performance of the battery 20.

It can be understood that the defect value of the primary particle is different from that of the secondary particle. In particular, the defect value of the primary particle may be greater than that of the secondary particle, or the defect value of the primary particle may be smaller than that of the secondary particle. The secondary particle is a hard carbon material prepared from the primary particle as an aggregate through secondary granulation. When the defect value of the primary particle is different from that of the secondary particle, i.e. the defect value of the secondary particle prepared by secondary granulation is smaller than that of the primary particle. This solution is easier to control the process and can reduce the difficulty of production and thus the cost of production, compared with the secondary particle prepared by secondary granulation with the relatively large defect value.

Hard carbon particles with a relatively large defect have more active sites and increase the storage sites of active ions so that the battery 20 has relatively high energy density and rate performance. In contrast, the hard carbon particles have more defects, and the side reactions of the hard carbon material with the electrolytic solution 300 increases, resulting in instability of the resulting solid electrolyte interface (SEI) film, reducing the first-cycle discharge efficiency of the battery 20. The hard carbon particles with a relatively small defect value have fewer active sites and a relatively small specific surface area, such that the energy density and rate performance of the battery 20 are relatively low. However, the smaller the defect value of the hard carbon particles is, the fewer side reactions between the hard carbon materials and the electrolytic solution 300 are, which is beneficial to generate a stable SEI film at a solid-liquid interface between the negative electrode plate 100 and the electrolytic solution 300, to improve the first-cycle discharge efficiency of the battery 20. Therefore, the hard carbon particles with different defect values are provided, such that it is possible to combine the advantages of the two hard carbon particles to improve the performance of the negative electrode plate 100, thereby improving the performance of the battery 20.

The negative electrode plate 100 of this embodiment of the present disclosure includes the negative current collector 110 and the negative material layer 130, and the negative material layer 130 includes a hard carbon material containing primary particles and secondary particles. The primary particles have a defect value different from that of the secondary particles. Compared with the solution of using the hard carbon particles having the same defect value as the negative material layer 130, the negative electrode plate 100 provided in the embodiments of the present disclosure improves the performance of the hard carbon material by compounding hard carbon particles having a relatively large defect value with hard carbon particles having a relatively small defect value. In this way, the negative electrode plate 100 has good performance, and can simultaneously satisfy the performance requirements of the battery 20, such as high energy density and high first-cycle discharge efficiency, and improve the dynamic performance and cycling performance of the battery 20.

In some embodiments, the secondary particle includes a body portion and a coating layer, and the coating layer is coated on the surface of the body portion. The coating layer of the secondary particle is beneficial to reduce the defect value of the hard carbon particles, such that the side reactions between the negative material layer 130 and the electrolytic solution 300 are reduced, which is beneficial to generate a stable SEI film at the interface of the negative electrode plate 100 and the electrolytic solution 300 and improve the first-cycle discharge efficiency of the battery 20. In addition, during the charging and discharging of the battery, the coating layer can resist the expansion of the hard carbon material, improving the safety performance of the negative electrode plate 100, and facilitating the improvement of the cycle performance of the battery 20.

In some embodiments, the primary particles have a defect value of G1, the secondary particles have a defect value of G2, and 0.04≤|G1-G2|≤0.2.

The defect value of the primary particles is G1, which can be calculated from the intensity ID1 of the D peak and the intensity IG1 of the G peak in the Raman spectrum. The defect value G1 of the primary particles is G1 = ID1/(ID1 + IG1). The D peak is a peak at a wavelength of 1350 cm⁻¹ and represents a defect of carbon atom lattice. The G peak is a peak at a wavelength of 1585 cm⁻¹ and represents the in-plane stretching vibration of the sp2 hybridization of carbon atoms. When the defect of the primary particles is relatively great, the primary particles have relatively large intensity ID1 of the D peak in the Raman spectrum, and the defect value G1 of the primary particles is relatively large.

The defect value of the secondary particles is G2, which can be calculated from the intensity ID2 of the D peak and the intensity IG2 of the G peak in the Raman spectrum. The defect value G2 of the secondary particles is G2=ID2/(ID2+IG2). The D peak is the peak at the wavelength of 1350 cm⁻¹, and represents the defect of carbon atom lattice. The G peak is at the wavelength of 1585 cm⁻¹ and represents the in-plane stretching vibration of the sp2 hybridization of carbon atoms. When the defect of the secondary particle is relatively great, the secondary particles have relatively large intensity ID2 of the D peak in the Raman spectrum, and the defect value G2 of the secondary particles is relatively large.

When the defect value G1 of the primary particles and the defect value G2 of the secondary particles satisfy 0.04≤|G1-G2|≤0.2, the primary particles and the secondary particles have different advantages due to different defect values. The hard carbon particles with a relatively large defect value can improve the energy density of the battery 20. The hard carbon particles with a relatively small defect value can improve the first-cycle discharge efficiency of the battery 20. The difference between the defect value of the primary particles and the defect value of the secondary particles can be controlled to facilitate the debugging of the parameters of the overall structure of the negative material layer 130, such that the negative material layer 130 has better performance. If |G1-G2|>0.2, the difference between the defect value of the primary particles and the defect value of the secondary particles is too large, which is not conducive to the debugging of the parameters of the overall structure of the negative material layer 130, and will affect the precision and accuracy of the debugging data. If |G1-G2|<0.04, the difference between the defect value of the primary particles and the defect value of the secondary particles is too small, making it difficult for the primary and secondary particles to exert their respective advantages, resulting in poor overall performance of the negative material layer 130, which cannot simultaneously meet the requirements of high energy density and high first-cycle efficiency of battery 20.

Specifically, the difference between the defect value G1 of the primary particles and the defect value G2 of the secondary particles (i.e., the values of |G1-G2|) may be, but are not limited to, 0.04, 0.06, 0.10, 0.13, 0.16, 0.18, 0.19, 0.2, etc.

In some embodiments, the defect value G1 of the primary particles is in a range of 0.5≤G1≤0.8.

When the defect value G1 of the primary particles is in a range of 0.5≤G1≤0.8, the primary particles have enough active sites to facilitate the storage of active ions, such that the battery 20 has relatively high energy density and rate performance. The defect value of the primary particles is not excessive enough to cause the first-cycle discharge efficiency of the battery 20 to be greatly reduced. Therefore, when 0.5≤G1≤0.8, the defect value of the primary particles is beneficial to balance the dynamic performance and the cycle performance of the negative material layer 130, such that the negative electrode plate 100 meets the requirements of the battery 20 for high energy density and high first-cycle efficiency simultaneously. When the value of the defect value G1 of the primary particles is greater than 0.8, the side reactions of the negative material layer 130 with the electrolytic solution 300 is greatly increased. In this way, the SEI film formed at the interface between the negative electrode plate 100 and the electrolytic solution 300 is unstable, lowering the first-cycle discharge efficiency of the battery 20. When the value of the defect value G1 of the primary particles is smaller than 0.5, the defect value of the primary particles is relatively small, and the number of the primary particles is less, reducing the storage sites of the active ions, and reducing the energy density and rate performance of the battery 20.

In an embodiment, the value of the defect value G1 of the primary particles may be, but is not limited to, 0.51, 0.54, 0.60, 0.65, 0.76, 0.8, or the like.

Preferably, when 0.55 ≤ G1 ≤ 0.75, the primary particles have an appropriate amount of active sites, which can both satisfy the storage of the active ions and reduce the side reactions of the negative material layer 130 with the electrolytic solution 300. In this way, the negative material layer 130 has better performance, improving the first-cycle discharge efficiency of the battery 20 while improving the energy density and rate performance of the battery 20.

In some embodiments, the defect value G2 of the secondary particles is in a value range of 0.5≤G2≤00.8.

When the defect value G2 of the secondary particles is in a range of 0.5≤G2≤0.8, the secondary particles have enough active sites to facilitate the storage of the active ions and the battery 20 has relatively high energy density and rate performance. The defect value of the secondary particles is not excessive enough to cause the first-cycle discharge efficiency of the battery 20 to be greatly reduced. Therefore, when 0.5≤G2≤0.8, the defect value of the secondary particles is beneficial to balance the dynamic performance and the cycle performance of the hard carbon material, such that the negative electrode plate 100 meets the requirements of the battery 20 for high energy density and high first-cycle efficiency simultaneously. When the value of the defect value G2 of the secondary particles is greater than 0.8, the side reactions of the hard carbon material with the electrolytic solution 300 is greatly increased, such that the SEI film formed at the interface between the negative electrode plate 100 and the electrolytic solution 300 is unstable, lowering the first-cycle discharge efficiency of the battery 20. When the value of the defect value G2 of the secondary particles is smaller than 0.5, the defect value of the secondary particles is smaller and the number of the active sites of the secondary particles is less, reducing the storage of the active ions, and reducing the energy density and rate performance of the battery 20.

In an embodiment, the value of the defect value G2 of the secondary particles may be, but is not limited to, 0.5, 0.51, 0.54, 0.60, 0.65, 0.76, 0.79, or the like.

Preferably, when 0.55 ≤G2≤ 0.75, the secondary particles have an appropriate amount of active sites, which can both satisfy the storage of the active ions and reduce the side reactions of the negative material layer 130 with the electrolytic solution 300. In this way, the negative material layer 130 has better performance, improving the first-cycle discharge efficiency of the battery 20 while improving the energy density and rate performance of the battery 20.

In some embodiments, a number content N of primary particles in the negative material layer 130 is in a value range of 0.1≤N≤0.9.

It may be noted that the number content of the primary particles in the negative material layer 130 is N, which is a ratio of the number n1 of the primary particles to a sum of the number n1 of the primary particles and the number n2 of the secondary particles in the negative material layer 130, i.e. the number content N of the primary particles N= n1/(n1+ n2). It may be understood that the number content of the secondary particles is (1-N). The number content N of the primary particles is controlled to regulate the amount of the primary particles in the hard carbon material mixed system, thereby achieving the regulation of the performance of the negative electrode plate 100. In an embodiment of the present disclosure, the test method for the number content N of the primary particles includes in the scanning electron micrograph of the hard carbon material, counting the number n1 of the primary particles and the number n2 of the secondary particles, and deriving the number content of the primary particles in the negative material layer 130 by a relationship N = n1/(n1 + n2).

When the number content N of the primary particles in the negative material layer 130 satisfies 0.1 ≤N≤ 0.9, the ratio of the primary particles to the secondary particles in the negative material layer 130 is in a reasonable range, such that the negative material layer 130 has both sufficient hard carbon particles with a relatively large defect value and sufficient hard carbon particles with a relatively small defect value. The particles with the relatively large defect value can provide more active sites for the negative material layer 130, thereby improving the energy density of the battery 20. The particles with the relatively small defect value can reduce the side reactions between the negative material layer 130 and the electrolytic solution 300, thereby improving the first-cycle discharge efficiency of the battery 20. In this way, the negative electrode plate 100 can meet the requirements of high energy density and high first-cycle discharge efficiency of the battery 20 simultaneously. When the value of the number content N of the primary particles in the negative material layer 130 is greater than 0.9, the value of the number n1 of the primary particles in the negative material layer 130 is much greater than the number n2 of the secondary particles. If the defect value of the primary particles is greater than the defect value of the secondary particles, the side reactions between the hard carbon material and the electrolytic solution 300 increase, resulting in instability of the SEI film formed at the interface between the negative electrode plate 100 and the instability 300 and reducing the first-cycle discharge efficiency of the battery 20. If the defect value of the primary particles is smaller than the defect value of the secondary particles, the hard carbon material has fewer active sites, reducing storage sites for the active ions, thereby reducing the energy density of the battery 20 including the negative electrode plate 100. When the value of the number content N of the primary particles in the negative material layer 130 is smaller than 0.1, the value of the number n1 of the primary particles in the negative material layer 130 is much smaller than the number n2 of the secondary particles. If the defect value of the primary particles is greater than the defect value of the secondary particles, the active sites of the hard carbon material are fewer and the storage sites of the active ions are reduced, thereby reducing the energy density of the battery 20 including the negative electrode plate 100. If the defect value of the primary particles is smaller than the defect value of the secondary particles, the side reactions between the hard carbon material and the electrolytic solution 300 increase, resulting in instability of the SEI film formed at the interface between the negative electrode plate 100 and the electrolytic solution 300 and reducing the first-cycle discharge efficiency of the battery 20.

In an embodiment, the number content N of the primary particles in the negative material layer 130 may have a value of, but not limited to, 0.1, 0.2, 0.4, 0.55, 0.6, 0.7, 0.8, 0.9, etc.

In some embodiments, a specific surface area (SSA) of the hard carbon material is in a value range of 1.3 ≤SSA≤6.

It may be understood that the numerical value SSA of the specific surface area of the hard carbon material may be a numerical value SSA of a specific surface area of the hard carbon material after the primary particles and the secondary particles are mixed. The value SSA of the specific surface area of the hard carbon material is controlled reasonably, such that the hard carbon material is in sufficient contact with the electrolytic solution 300, increasing the transport rate of the active ions. Further, the side reactions of the hard carbon material with the electrolytic solution 300 are fewer, thereby enabling the battery 20 to have better rate performance and higher first-cycle discharge efficiency. In an embodiment of the present disclosure, the numerical value SSA of the specific surface area of the hard carbon material is obtained through a test performed by a specific surface area analyzer.

When the numerical value SSA of the specific surface area of the hard carbon material satisfies 1.3 ≤SSA≤ 6, the numerical value of the specific surface area of the hard carbon material is in a reasonable range. The numerical value of the specific surface area of the hard carbon material can enable the hard carbon material to have a sufficient contact area with the electrolytic solution 300, facilitating the transport of the active ions and improving the rate performance and energy density of the battery 20. Further, the value of the specific surface area of the hard carbon material enables the side reactions between the negative electrode plate 100 and the electrolytic solution 300 to be not excessive enough to affect the first-cycle discharge efficiency of the battery 20. The negative electrode plate 100 has better performance, and can simultaneously satisfy the requirements of the battery 20 for high first-cycle efficiency, high energy density, and high rate performance. When the numerical value SSA of the specific surface area of the hard carbon material is greater than 6, the contact area between the hard carbon material and the electrolytic solution 300 is too large, the side reactions between the hard carbon material and the electrolytic solution 300 are prone to increase, leading to instability of the SEI film formed at the interface between the negative electrode plate 100 and the electrolytic solution 300, and reducing the first-cycle discharge efficiency of the battery 20. Meanwhile, the value of the specific surface area of the hard carbon material is too large, which is detrimental to the processing and production of the negative electrode plate 100, increasing the production cost. When the numerical value SSA of the specific surface area of the hard carbon material is smaller than 1.3, the contact area of the hard carbon material with the detrimental 300 is excessively small, lowering the transport rate of the active ions, thereby reducing the rate performance and energy density of the battery 20.

In an embodiment, the numerical value SSA of the specific surface area of the hard carbon material may have values of, but is not limited to, 1.3, 2.3, 3.2, 4.5, 5, 5.6, 6, etc.

In some embodiments, a porosity P of the negative material layer 130 is in a range of 0.32 ≤P≤0.4.

The porosity P of the negative material layer 130 is controlled reasonably to improve the wetting effect of the electrolytic solution 300 in the negative electrode plate 100 and reduce the transport resistance of the active ions, thereby improving the cycle performance and dynamic performance of the battery 20. In an embodiment of the present disclosure, the porosity P of the negative material layer 130 is measured by a pressure pump method (also referred to as "mercury intrusion method"). Since an average particle size of the primary particles is different from an average particle size of the secondary particles, the porosity P of the negative material layer 130 can be controlled by a rolling pressure during the preparation of the negative electrode plate 100.

When the porosity P of the negative material layer 130 satisfies 0.32 ≤P≤ 0.4, the porosity P of the negative material layer 130 is in a reasonable range, improving the wetting performance and liquid retention capacity of the electrolytic solution 300 in the negative electrode plate 100, reducing the transport resistance of the active ions, and facilitating the transport of the active ions. Hence, the negative electrode plate 100 has relatively high rate performance, and the cycle life of the negative electrode plate 100 is prolonged. When the value of the porosity P of the negative material layer 130 is greater than 0.4, the side reactions of the negative material layer 130 with the electrolytic solution 300 increases, reducing the first-cycle discharge efficiency of the battery 20 and reducing the cycle performance of the battery 20. When the value of the porosity P of the negative material layer 130 is smaller than 0.32, the wetting property and the liquid retention capacity of the electrolytic solution 300 in the negative electrode plate 100 are relatively poor, increasing the transport resistance of the active ions. In this way, the rate performance of the negative electrode plate 100 is relatively low, and the cycle life of the battery 20 is reduced.

In an embodiment, the porosity P of the negative material layer 130 may have a value of, but not limited to, 0.32, 0.35, 0.36, 0.37, 0.39, 0.4, etc.

In some embodiments, the primary particle D50 has a particle size R1 in a value range of 4 µm ≤R1≤ 12 µm, where D50 is a particle size corresponding to a cumulative particle size distribution percentage of 50%.

The particle group is usually composed of a large amount of particles with different sizes, which are divided into several grades based on their particle sizes. The differential distribution refers to a relative content of particles in each grade. The cumulative distribution refers to a total content of particles that are in a grade smaller than a certain grade.

It may be understood that the particle size R1 of the primary particle D50 is an equivalent diameter of the primary particles when the cumulative distribution in the particle size distribution curve is 50%. In other words, in the negative material layer 130, the number of primary particles that have a particle size larger than R1 accounts for 50% of the number of all primary particles, and the number of primary particles that have a particle size smaller than R1 accounts for 50% of the number of all primary particles.

When the particle size R1 of the primary particle D50 satisfies 4 µm ≤R1≤ 12 µm, the primary particles facilitate to achieve compact stack with the secondary particles, thereby improving the energy density of the battery 20. In addition, the regulation of the porosity of the negative electrode plate 100 is also facilitated, thereby increasing the wetting degree of the electrolytic solution 300 in the negative electrode plate 100, increasing the transport speed of the active ions, and finally increasing the rate performance of the battery 20 and extending the cycle life of the battery 20. When the value of the particle size R1 of the primary particle D50 is greater than 12 µm, the particle sizes of the primary particles are too large to achieve compact stack with the secondary particles, thereby reducing the energy density of the battery 20. Furthermore, in the process of controlling the porosity of the negative electrode plate 100, it is difficult for the primary particles having too large particle sizes to fill gaps between the secondary particles, such that the porosity of the negative electrode plate 100 is too large, the side reactions of the negative material layer 130 with the electrolytic solution 300 are increased, and the first-cycle discharge efficiency of the battery 20 is reduced and the cycle performance of the battery 20 is reduced. When the particle size R1 of the primary particle D50 is smaller than 3 µm, the particle sizes of the primary particles are too small and thus the primary particles easily fill the gaps between the secondary particles, such that the porosity of the negative electrode plate 100 is too small, resulting in poor wetting performance and liquid retention capacity of the electrolytic solution 300 in the negative electrode plate 100 and increasing the transport resistance of the active ions. In this way, the rate performance of the negative electrode plate 100 is relatively low, and the cycle life of the battery 20 is reduced.

In an embodiment, the particle size R1 of the primary particle D50 may be, but is not limited to, 4 µm, 4.1 µm, 4.3 µm, 5 µm, 7 µm, 8 µm, 10 µm, 12 µm, etc.

In some embodiments, the particle size R2 of the secondary particle D50 is in a value range of 8 µm ≤R2≤ 18 µm, where D50 is the particle size corresponding to a cumulative particle size distribution percentage of 50%.

It may be understood that the particle size R2 of the secondary particle D50 is the equivalent diameter of the secondary particles when the cumulative distribution in the particle size distribution curve is 50%. In other words, in the negative material layer 130, the number of secondary particles having a particle size larger than R2 accounts for 50% of the number of all secondary particles, and the number of secondary particles having particle sizes smaller than R2 accounts for 50% of the number of all secondary particles.

When the particle size D50 of the secondary particle satisfies 8 µm ≤R2≤ 18 µm, the secondary particles facilitate to achieve compact stack with the primary particles, thereby improving the energy density of the battery 20. In addition, the regulation of the porosity of the negative electrode plate 100 is also facilitated, thereby increasing the wetting degree of the electrolytic solution 300 on the negative electrode plate 100, increasing the transport speed of the active ions, and finally increasing the rate performance of the battery 20 and extending the cycle life of the battery 20. When the value of the particle size R2 of the secondary particle D50 is greater than 18 µm, the particle sizes of the secondary particles are too large to achieve compact stack with the primary particles, thereby reducing the energy density of the battery 20. Furthermore, in the process of controlling the porosity of the negative electrode plate 100, the particle sizes of the secondary particles are too large, and it is thus difficult for the primary particles to fill gaps between the secondary particles. The porosity of the negative electrode plate 100 is too large, the side reactions between the negative material layer 130 and the electrolytic solution 300 are aggravated, the first-cycle discharge efficiency of the battery 20 is reduced, and the cycle performance of the battery 20 is reduced. When the particle size R2 of the secondary particle D50 is smaller than 8 µm, the particle sizes of the secondary particles are too small, and thus the differences between the particle sizes of the secondary particles and the particle sizes of the primary particles are too small to achieve compact stack with the primary particles, thereby reducing the energy density of the battery 20.

In an embodiment, the particle size R2 of the secondary particle D50 may be, but is not limited to, 8 µm, 10.5 µm, 13 µm, 14 µm, 15 µm, 17 µm, 18 µm, etc.

In some embodiments, a weight of the primary particles is M1 and a weight of the secondary particles is M2, and M1/M2 satisfies 0.03 ≤M1/M2≤ 15.

Adjusting the ratio M1/M2 of the weight M1 of the primary particles to the weight M2 of the secondary particles allows to adjust the value of the number content N of the primary particles in the negative material layer 130. It may be noted that the value of the average particle size R1 of the primary particles and the value of the average particle size R2 of the secondary particles also have influence on the value of M1/M2. In other words, when the same value of N is employed, the value of M1/M2 is different because the average particle size R1 of the primary particles is different from the average particle size R2 of the secondary particles.

When the ratio M1/M2 of the weight M1 of the primary particles to the weight M2 of the secondary particles satisfies 0.03 ≤M1/M2≤ 15, it is advantageous to control the value of the number content N of the primary particles in the negative material layer 130 to satisfy 0.1 ≤N≤ 0.9. In this way, in the negative material layer 130, the weight ratio of the primary particles to the secondary particles, the particle size of the primary particles and the particle size of the secondary particles are in a reasonable range so that the negative material layer 130 has more active sites and does not have too many side reactions with the electrolytic solution 300. Therefore, the battery 20 including the negative electrode plate 100 has a high energy density and a high first-cycle discharge efficiency. When the ratio M1/M2 of the weight M1 of the primary particles to the weight M2 of the secondary particles is greater than 15, the weight M1 of the primary particles is too large, resulting in the value of the number content N of the primary particles in the negative material layer 130 being too large. In this way, there are too many primary particles and too few secondary particles in the negative material layer 130. The negative material layer 130 cannot combine the advantages of two kinds of particles with different particle sizes and different defect values. The performance of the negative electrode plate 100 is poor, and cannot simultaneously meet the performance requirements of the battery 20, such as high energy density and high first-cycle discharge efficiency. When the ratio M1/M2 of the weight M1 of the primary particles to the weight M2 of the secondary particles is smaller than 0.03, the weight M1 of the primary particles is too small, resulting in the value of the number content N of the primary particles in the negative material layer 130 being too small, such that there are too few primary particles and too many secondary particles in the negative material layer 130. Finally, the negative electrode plate 100 cannot simultaneously satisfy the requirements of high energy density and high first-cycle discharge efficiency of the battery 20.

In an embodiment, the ratio of the weight M1 of the primary particles to the weight M2 of the secondary particles may be, but is not limited to, 0.03, 0.1, 0.5, 1, 2.6, 3.98, 5.00, 8.29, 10.50, 13.60, 15, etc.

In some embodiments, a performance factor h of the negative electrode plate 100 satisfies a relationship h=[N×G1+(1-N)×G2]×SSA×P, where 0.2 ≤h≤ 1.8. N is the number content of the primary particles in the negative material layer 130, G1 is the defect value of the primary particles, G2 is the defect value of the secondary particles, SSA is the numerical value of the specific surface area of the hard carbon material, and P is the porosity of the negative material layer 130.

As can be appreciated, the performance factor h of the negative electrode plate 100 represents the overall performance of the negative electrode plate 100, such as energy density, first-cycle discharge efficiency, rate performance, dynamic performance, and cycle performance.

As can be appreciated, the performance factor h of the negative electrode plate 100 satisfies the relationship of h=[N×G1+(1-N)×G2]×SSA×P. In the negative material layer 130, the number content N of the primary particles, the defect value G1 of the primary particles, the defect value G2 of the secondary particles, the numerical value SSA of the specific surface area of the hard carbon material and the porosity P of the negative material layer 130 is adjusted to combine the excellent performance of the primary particles and the secondary particles. That is, the primary particles can provide more active sites for the negative material layer 130, thereby increasing the energy density of the battery 20. The secondary particles can reduce the side reactions between the negative material layer 130 and the electrolyte and improve the first-cycle discharge efficiency of the battery 20. The structural parameters of the entire negative material layer 130 and the structural parameters of the negative electrode plate 100 is regulated so that the performance factor h of the negative electrode plate 100 can be further regulated. In this way, the primary particles and the secondary particles can exert respective advantages, thereby balancing the cycle performance and charge-discharge performance of the battery 20 while improving the overall performance of the negative electrode plate 100, such that the battery 20 including the negative electrode plate 100 has higher energy density and better rate performance while having good cycle performance and stability.

When the value of the performance factor h of the negative electrode plate 100 satisfies 0.2 ≤h≤ 1.8, the energy density and the first-cycle discharge efficiency of the battery 20 including the negative electrode plate 100 are higher, and the cycle performance and the power performance of the battery 20 are better. When the value of the performance factor h of the negative electrode plate 100 is greater than 1.8, the comprehensive performance of the negative electrode plate 100 is poor, and the negative electrode plate 100 cannot meet the requirements of the battery 20 for high energy density, high first-cycle discharge efficiency, and high-rate performance at the same time. When the value of the performance factor h of the negative electrode plate 100 is smaller than 0.2, the negative electrode plate 100 cannot meet the requirements of the battery 20 for high energy density, high first-cycle discharge efficiency, and high-rate performance, etc. and the comprehensive performance of the negative electrode plate 100 is poor.

In an embodiment, the value of the performance factor h of the negative electrode plate 100 may be, but is not limited to, 0.2, 0.6, 0.75, 0.9, 1.2, 1.5, 1.6, 1.7, 1.8, etc.

Preferably, when 0.3g ≤h≤ 1.4, the comprehensive performance of the negative electrode plate 100 is superior, such that the battery 20 including the negative electrode plate 100 not only has a higher energy density and a high first-cycle discharge efficiency, but also has higher cycle performance and safety performance.

In some embodiments, the negative electrode plate 100 further includes a first binder and a first conductive agent.

The first binder serves to bond and hold the negative material layer 130, to enhance the electrical contact of the negative material layer 130 with the negative current collector 110, and stabilize the structure of the negative electrode plate 100. The first binder includes at least one of styrene butadiene rubber (SBR), polyvinylidene fluoride (PVDF), polytetrafluoroethylene (PTFE), polyvinyl alcohol (PVA), polyacrylonitrile (PAN), polyacrylic acid (PAA), polyacrylate, carboxymethyl cellulose (CMC), or sodium alginate.

The first conductive agent enables the negative electrode plate 100 to have good charge and discharge performance, reduces the contact resistance of the negative electrode plate 100, accelerates the movement rate of electrons, and thus improves the charge and discharge efficiency of the negative electrode plate 100. The first conductive agent includes at least one of acetylene black, conductive carbon black, carbon nanotubes, carbon fibers, or graphene.

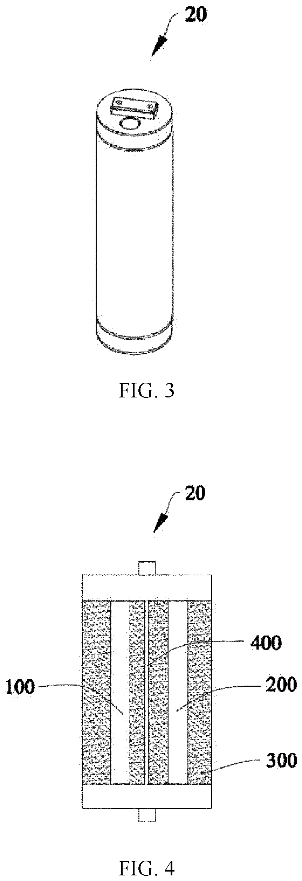

Referring to FIGS. 3 and 4, embodiments of the present disclosure also provide a battery 20 including a positive electrode plate 200, the electrolytic solution 300, the negative electrode plate 100 as described in the embodiments of the present disclosure, and a separator 4000. The positive electrode plate 200 is at least partially immersed in the electrolytic solution 300. The separator 400 is located on a side of the positive electrode plate 200, and is at least partially immersed in the electrolytic solution 300. The negative electrode plate 100 is disposed on a side of the separator 400 facing away from the positive electrode plate 200, and is at least partially immersed in the electrolytic solution 300.

Alternatively, the positive electrode plate 200 includes a positive current collector and a positive material layer provided on a surface of the positive current collector. The positive material layer includes a positive active material, a second binder, and a second conductive agent.

The positive active material includes at least one of transition metal oxide, polyanionic compound, organic polymer, or a Prussian blue-type material.

The second binder serves to bind and hold the positive material layer, enhance electronic contact of the positive material layer with the positive current collector and stabilize the structure of the positive electrode plate 200. The second binder includes at least one of polyvinylidene fluoride (PVDF), polytetrafluoroethylene (PTFE), polyacrylonitrile (PAN), or polyacrylic acid (PAA).

The second conductive agent enables the positive electrode plate 200 to have good charge and discharge performance, reduces the contact resistance of the positive electrode plate 200, and accelerates the movement rate of electrons, thereby improving the charge and discharge efficiency of the positive electrode plate 200. The second conductive agent includes at least one of acetylene black, conductive carbon black, carbon nanotubes, carbon fibers, or graphene.

Alternatively, the electrolytic solution 300 includes an electrolyte salt (such as, lithium hexafluorophosphate and sodium hexafluorophosphate) and an organic solvent. The specific kinds and compositions of the electrolyte salt and the organic solvent are both conventional choices in the field of the battery 20, and can be selected based on practical requirements.

The separator 400 is made of any separator material known in the field of the battery 20, and includes at least one of polypropylene (PP), polyethylene (PE), or a ceramic separator 400.

The battery 20 includes the negative electrode plate 100 in the embodiments of the present disclosure. The negative electrode plate 100 improves the overall performance thereof by adjusting the overall structure of the negative material layer 130, resulting in the battery 20 including the negative electrode plate 100 to have high energy density and high first cycle efficiency.

The technical solutions of the present disclosure will be further described in examples below.

### Examples 1 to 7

### 1. Preparation of Negative Electrode Plate 100

(1) Preparation of secondary particles is described below. The primary particles were calcined at 1000°C-1300°C under protection of an inert gas (e.g., argon gas), were then mixed with bonded asphalt, and were subjected to secondary granulation in a reactor to obtain the secondary particles. Coated asphalt was added to the secondary particles, which were then stirred. The mixture was calcined and carbonized under the protection of an inert gas (e.g., argon gas) at a temperature lower than 1000°C to be coated with carbon, followed by screening and demagnetization processes to obtain carbon-coated secondary particles.
(2) Preparation of a hard carbon material is described below. The primary particles were mixed with the secondary particles coated with the carbon coating to obtain the hard carbon material.
(3) Preparation of the negative electrode plate 100 is described below. The hard carbon material, the first conductive agent (conductive carbon black) and the first binder (sodium carboxymethyl cellulose and styrene-butadiene rubber, CMC and SBR) were mixed in a mass ratio of 95.5: 1.5: 2. The mixed powder was placed into a vacuum stirrer, added with deionized water, and stirred to obtain a negative electrode slurry. The negative electrode slurry was uniformly coated on two opposite side surfaces of the negative current collector 110 to form the negative material layer 130. The negative current collector 110 coated with the negative electrode slurry was transferred to an oven for drying, followed by rolling and slitting to obtain the negative electrode plate 100.

### 2. Preparation of Positive Electrode Plate 200

A positive active material (Na₃V₂(PO4)₃), the second conductive agent (conductive carbon black) and the second binder (polyvinylidene fluoride, PVDF) were mixed in a mass ratio of 95: 2.5: 2.5. The mixed powder was placed into the vacuum stirrer, added with N-methylpyrrolidone (NMP), and stirred uniformly to obtain a positive electrode slurry. The positive electrode slurry was uniformly coated on two opposite side surfaces of the positive current collector. The positive current collector coated with the positive electrode slurry was transferred to the oven for drying, and was then subjected to rolling and slitting to obtain the positive electrode plate 200.

### 3. Preparation of Electrolytic Solution 300

Ethylene carbonate (EC), ethyl methyl carbonate (EMC) and diethyl carbonate (DEC) were mixed in a volume ratio of 1: 1: 1 to obtain a mixed solvent. Dry sodium salt NaPF₆ was then added to the mixed solvent to prepare the electrolytic solution 300 with a concentration of 1 mol/L.

### 4. Preparation of Battery 20

The positive electrode plate 200, the negative electrode plate 100 and the polypropylene separator 400 prepared as described above were stacked in sequence. The separator 400 was located between the positive and negative electrode plates 100, and was then wound to obtain a bare cell. The bare cell was loaded into an aluminum-plastic film soft package, dried, and filled with the electrolytic solution 300. The battery 20 was obtained after vacuum packaging, standing, formation, shaping, and other processes.

The parameters of the hard carbon material and the parameters of the negative material layer in Examples 1 to 7 were different. The specific information is shown in Table 1.

In order to emphasize the advantageous effects of the present disclosure, the following comparative examples are provided.

### Comparative Examples 1 and 2

The preparation of the negative electrode plate, the preparation of the positive electrode plate, the preparation of the electrolytic solution and the preparation of the battery in Comparative Examples 1 and 2 are the same as the corresponding steps in Examples 1 to 7. The parameters of the hard carbon material and the parameters of the negative material layer 130 in Comparative Example 1 and Comparative Example 2 are set and compared with Examples 1 to 7, and the specific information is shown in Table 1.

### Comparative Example 3

### 1. Preparation of Negative Electrode Plate 100

(1) Preparation of secondary particles is described below. The primary particles were calcined at 1000°C-1300°C under protection of an inert gas (e.g., argon gas), were then mixed with bonded asphalt, and were subjected to secondary granulation in a reactor to obtain the secondary particles. Coated asphalt was added to the secondary particles, which were then stirred. The mixture was calcined and carbonized under the protection of an inert gas (e.g., argon gas) at a temperature lower than 1000°C to be coated with carbon, followed by screening and demagnetization processes to obtain carbon-coated secondary particles. The hard carbon material in this Comparative Example contained only secondary particles without primary particles.
(2) Preparation of the negative electrode plate 100 is described below. The hard carbon material, the first conductive agent (conductive carbon black) and the first binder (sodium carboxymethyl cellulose and styrene-butadiene rubber, CMC and SBR) were mixed in a mass ratio of 95.5: 1.5: 2. The mixed powder was placed into the vacuum stirrer, added with deionized water, and stirred to obtain a negative electrode slurry. The negative electrode slurry was uniformly coated on two opposite side surfaces of the negative current collector 110 to form the negative material layer 130. The negative current collector 110 coated with the negative electrode slurry was transferred to the oven for drying, followed by rolling and slitting to obtain the negative electrode plate 100.

2. Preparation of a positive electrode plate 200 is the same as the preparation of the positive electrode plate 200 in Examples 1 to 7.

3. Preparation of an electrolytic solution 300 is the same as the preparation of electrolytic solution 300 in Examples 1 to 7.

4. Preparation of a battery 20 is the same as the preparation of battery 20 in Examples 1 to 7.

The parameters of the hard carbon material and the parameters of the negative material layer of Comparative Example 3 were set in comparison with Examples 1 to 7. The specific information is shown in Table 1.

### Comparative Example 4

### 1. Preparation of Negative Electrode Plate 100

(1) Preparation of a hard carbon material is described below. The hard carbon material in this Comparative Example contained only primary particles without secondary particles.
(2) Preparation of the negative electrode plate 100 is described below. The hard carbon material, the first conductive agent (conductive carbon black) and the first binder (sodium carboxymethyl cellulose and styrene-butadiene rubber, CMC and SBR) were mixed in a mass ratio of 95.5: 1.5: 2. The mixed powder was placed into the vacuum stirrer, added with deionized water, and stirred to obtain a negative electrode slurry. Two opposite side surfaces of the negative current collector 110 were uniformly coated with the negative electrode slurry to form the negative material layer 130. The negative current collector 110 coated with the negative electrode slurry was transferred to the oven for drying, followed by rolling and slitting to obtain the negative electrode plate 100.

2. Preparation of a positive electrode plate 200 is the same as the preparation of the positive electrode plate 200 in Examples 1 to 7.

3. Preparation of an electrolytic solution 300 is the same as the preparation of electrolytic solution 300 in Examples 1 to 7.

4. Preparation of a battery 20 is the same as the preparation of battery 20 in Examples 1 to 7.

The parameters of the hard carbon material and the parameters of the negative material layer of Comparative Example 3 were set in comparison with Examples 1 to 7. The specific information is shown in Table 1.

### Performance Test

1. A defect value test is described below. The defect value G1 of the primary particles and the defect value G2 of the secondary particles in Examples 1 to 7 and the defect value G1 of the primary particles and the defect value G2 of the secondary particles in Comparative Examples 1 to 4 were measured by Raman spectroscopy, respectively.
2. A number content test is described below. The scanning electron microscopes of the sections of the negative electrode plates obtained in Examples 1 to 7 and Comparative Examples 1 to 4 were tested. The number n1 of the primary particles and the number n2 of the secondary particles were calculated from the scanning electron microscopes. The number contents N of the primary particles in the negative material layer 130 in Examples 1 to 7 and Comparative Examples 1 to 4 were obtained by the relationship of N = n1/(n1+n2).
3. A specific surface area test is described below. A specific surface area of a solid matter was measured by a gas adsorption BET method according to GB/T 19587-2017/ISO 9277:2010 to obtain the specific surface area values SSA of the hard carbon materials in Examples 1 to 7 and Comparative Examples 1 to 4.
4. A porosity test is described below. The pore size distribution and porosity of the solid material was measured by the mercury intrusion method and the gas adsorption method according to GB/T 21650.1-2008/ISO 15901-1, 2005. The porosities of the negative electrode plates 100 in Examples 1 to 7 and Comparative Examples 1 to 4 were calculated based on the pore size distribution and porosity of the material. The detailed test may see Mercury Intrusion Method in Part 1.
5. The performance factors h of the negative electrode plates in Examples 1 to 7 and Comparative Examples 1 to 4 were calculated in accordance with the equation h=[N×G1+(1-N)×G2]×SSA×P.

The structural parameters of the negative electrode plates 100 of Examples 1 to 7 and Comparative Examples 1 to 4 obtained in the above performance tests are shown in Table 1.

**Table 1: Structural Parameters of Negative Electrode plates 100 of Examples 1 to 7 and Comparative Examples 1 to 4**

| | Positive active material | Parameters of hard carbon material | | | | | | | | Parameters of negative material layer 130 | Performance factor h |
|---|---|---|---|---|---|---|---|---|---|---|---|
| | | G1 | G2 | \|G1-G 2\| | SSA (m²/g) | N | M1/M2 | R1 (µm) | R2 (µ m) | Porosity P | |
| Example 1 | Na₃V₂(PO₄)₃ | 0.7 | 0.55 | 0.15 | 3.4 | 0.5 | 0.61 | 6 | 11 | 0.34 | 0.72 |
| Example 2 | Na₃V₂(PO₄)₃ | 0.65 | 0.58 | 0.07 | 4.2 | 0.6 | 0.85 | 5 | 10 | 0.36 | 0.94 |
| Example 3 | Na₃V₂(PO₄)₃ | 0.68 | 0.56 | 0.12 | 2 | 0.4 | 0.54 | 8 | 14 | 0.38 | 0.46 |
| Example 4 | Na₃V₂(PO₄)₃ | 0.69 | 0.57 | 0.13 | 5.3 | 0.6 | 0.92 | 5 | 9 | 0.37 | 1.26 |
| Example 5 | Na₃V₂(PO₄)₃ | 0.8 | 0.65 | 0.15 | 7.5 | 0.7 | 1.38 | 4 | 9 | 0.27 | 1.53 |
| Example 6 | Na₃V₂(PO₄)₃ | 0.58 | 0.52 | 0.06 | 1.2 | 0.3 | 0.33 | 10 | 15 | 0.36 | 0.23 |
| Example 7 | Na₃V₂(PO₄)₃ | 0.53 | 0.51 | 0.02 | 1.5 | 0.4 | 0.35 | 8 | 13 | 0.33 | 0.26 |
| Comparative Example 1 | Na₃V₂(PO₄)₃ | 0.43 | 0.4 | 0.03 | 1.5 | 0.5 | 0.82 | 10 | 17 | 0.26 | 0.16 |
| Comparative Example 2 | Na₃V₂(PO₄)₃ | 0.9 | 0.75 | 0.15 | 9.6 | 0.45 | 0.49 | 4 | 8 | 0.25 | 1.96 |
| Comparative Example 3 | Na₃V₂(PO₄)₃ | / | 0.5 | / | 1.3 | / | / | / | 15 | 0.27 | 0.18 |
| Comparative Example 4 | Na₃V₂(PO₄)₃ | 0.7 | / | / | 1.1 | 1 | / | 5 | / | 0.22 | 0.17 |

### Performance Test of Battery 20

### 6.1 Energy Density Test

Each of sodium ion batteries 20 was weighed using an electronic balance at 25°C. Each of the prepared sodium ion batteries 20 was charged and discharged at a rate of 1 C at 25°C, and the actual discharge energy was recorded. The ratio of the actual discharge energy of the sodium ion battery 20 to the weight of the sodium ion battery 20 was the actual energy density of the sodium ion battery 20.

### 6.2 Cycle Performance Test

Each of the sodium ion batteries 20 was charged at a rate of 3 C and discharged at a rate of 1 C, respectively. A full-charge-discharge cycle test was then performed. A capacity retention rate after 2000 cycles was recorded.

### 6.3 Dynamic Performance Test

At 25°C, each of the sodium ion batteries 20 was fully charged at 4 C and fully discharged at 1 C. After 10 repeated charge-discharge cycles, the battery 20 was charged to a fully charged state at a rate of 4 C. Then the negative electrode plate 100 was disassembled, and the surface of the negative electrode plate 100 was observed for sodium precipitation. If an area of a sodium precipitation region on the surface of the negative electrode plate 100 was smaller than 2%, it was considered as no sodium precipitation. If the area of the sodium precipitation region on the surface of the negative electrode plate 100 was smaller than 5%, it was considered as slight sodium precipitation. If the area of the sodium precipitation region on the surface of the negative electrode plate was in a range of 5% to 40%, it was considered as moderate sodium precipitation. If the area of the sodium precipitation region on the surface of the negative electrode plate was greater than 40%, it was considered as serious sodium precipitation.

The electrochemical performance of the batteries 20 obtained from the performance tests of Examples 1 to 7 and the batteries 20 obtained from the performance tests of Comparative Examples 1 to 4 are shown in Table 2.

**Table 2 Electrochemical performance of the batteries 20 of Examples 1 to 7 and Comparative Examples 1 to 4**

| Group | Energy Density (Wh/kg) | Capacity Retention After 2000 Cycles | First Cycle Charge-discharge Efficiency | Sodium Precipitation |
|---|---|---|---|---|
| Example 1 | 106 | 90.3% | 91.7% | No Sodium Precipitation |
| Example 2 | 108 | 91.2% | 92.1% | No Sodium Precipitation |
| Example 3 | 105 | 89.8% | 91.3% | No Sodium Precipitation |
| Example 4 | 103 | 89.4% | 89.9% | No Sodium Precipitation |
| Example 5 | 99 | 83.8% | 88.4% | Slight Sodium Precipitation |
| Example 6 | 98 | 83.5% | 88.2% | Slight Sodium Precipitation |
| Example 7 | 93 | 82.5% | 87.9% | Slight Sodium Precipitation |
| Comparative Example 1 | 85 | 81.1% | 87.5% | Moderate Sodium Precipitation |
| Comparative Example 2 | 79 | 77.5% | 86.4% | Moderate Sodium Precipitation |
| Comparative Example 3 | 80 | 80.6% | 87.3% | Moderate Sodium Precipitation |
| Comparative Example 4 | 77 | 78.6% | 86.0% | Moderate Sodium Precipitation |

It can be seen from Tables 1 and 2 that in Examples 1 to 7, the value of the performance factor h of the negative electrode plate 100 were 0.72, 0.94, 0.46, 1.26, 1.53, 0.23, and 0.26, respectively, satisfying 0.2 ≤h≤ 1.8, and the negative electrode plate 100 had better comprehensive performance. The energy density and the first-cycle discharge efficiency of the battery 20 including the negative electrode plate 100 were higher, and the cycle performance and the power performance of the battery 20 were both better. The value of the performance factor h of the negative electrode plate 100 in Examples 1 to 4 satisfied 0.3 ≤h≤ 1.4. The negative electrode plate 100 not only had good comprehensive performance but also did not precipitate sodium during the test, and had high safety performance. The negative electrode plate 100 in Example 2 had the best performance, and thus had the highest energy density, the highest first-cycle discharge efficiency, and the highest capacity retention after 2000 cycles. It can be seen therefrom that when the performance factor h of the negative electrode plate 100 satisfied 0.2 ≤h≤ 1.8, the comprehensive performance of the corresponding negative electrode plate 100 firstly gradually increased and then gradually decreased. In Comparative Example 1, Comparative Example 3, and Comparative Example 4, the values of the performance factors h of the negative electrode plates 100 were smaller than 0.2, and the comprehensive performance of the corresponding negative electrode plate 100 was poor. The energy density and the first-cycle discharge efficiency of the battery 20 including the negative electrode plate 100 were low, and the cycle performance and safety performance of the battery 20 were poor. The value of the performance factor h of the negative electrode plate 100 in Comparative Example 2 was greater than 1.8, and the comprehensive performance of the corresponding negative electrode plate 100 was also poor. The energy density and the first-cycle discharge efficiency of the battery 20 including the negative electrode plate 100 were low, and the cycle performance and safety performance of the battery 20 were poor.

Specifically, Examples 1 to 4 and Example 7 in Tables 1 and 2 show the absolute value of the difference between the defect value G1 of the primary particles and the defect value G2 of the secondary particles (i.e., the value of |G1-G2|) and the electrochemical performance of the corresponding battery 20. The values of |G1-G2| in Examples 1 to 4 all satisfied 0.04≤|G1-G2|≤0.2 so that there was a difference between the defect value G1 of the primary particles and the defect value G2 of the secondary particles. In this way, the primary particles and the secondary particles have different advantages due to different defect values. The hard carbon particles with a larger defect value can improve the energy density of the battery 20, and the hard carbon particles with a smaller defect value can improve the first-cycle discharge efficiency of the battery 20, which is beneficial to the debugging of the parameters of the overall structure of the negative material layer 130 so that the negative material layer 130 had better performance. In Example 7, the absolute value of the difference between the defect value G1 of the primary particles and the defect value G2, i.e., the value of |G1-G2|, was smaller than 0.04. The difference between the defect value of the primary particles and the defect value of the secondary particles was too small, and thus the primary particles and the secondary particles were difficult to exert their respective advantages. The overall performance of the negative material layer 130 was poor, and the battery 20 corresponding to Example 7 had a lower energy density and first-cycle discharge efficiency.

In particular, reference is made to the values for the specific surface area SSA of the hard carbon materials and to the electrochemical performance of the corresponding batteries 20 as described in Examples 2 and 6 in Tables 1 and 2. The values of the specific surface area SSA of the hard carbon materials described in Examples 2 and 6 were 4.2 and 1.2, respectively.

The value SSA of the specific surface area of the hard carbon material described in Example 2 was a moderate value, such that the hard carbon material had a sufficient contact area with the electrolytic solution 300 and did not cause excessive side reactions with the electrolytic solution 300 to reduce the first-cycle discharge efficiency. Hence, the battery 20 corresponding to Example 2 had a higher energy density and a higher first-cycle discharge efficiency. The value SSA of the specific surface area of the hard carbon material in Example 6 was smaller than 1.3. The hard carbon material had a smaller specific surface area and reduced surface active sites. The charge-discharge performance of the battery 20 was slightly poor. The energy density of the battery 20 was reduced, and there was slight sodium precipitation phenomenon during the test, reducing the capacity retention rate and safety performance of the sodium-ion battery 20 during cycling.

Specifically, please refer to Tables 1 and 2 for the values of the number contents N of primary particles in the negative material layers 130 and the electrochemical performance of the corresponding batteries 20 of Comparative Example 3, Example 6, Example 1, Example 5, and Comparative Example 4. The number contents N of the primary particles in the negative material layers 130 of Comparative Example 3, Example 6, Example 1, Example 5 and Comparative Example 4 had values of 0, 0.3, 0.5, 0.7, and 1, respectively.

The negative material layer 130 of Comparative Example 3 was only made of secondary particles having a smaller defect value, such that the negative material layer 130 had fewer active sites and reduced storage sites for active ions, resulting in a lower energy density of the battery 20. The values of the number contents N of the primary particles in the negative material layers 130 in Examples 6, 1 and 5 all satisfied 0.1 ≤N≤ 0.9. The performance of the negative material layer corresponding to Example 1 was optimal, and the primary particles in the negative material layer can provide the negative material layer 130 more active sites and did not cause too many side reactions with the electrolytic solution 300 to affect the performance of the negative material layer, thereby achieving the highest energy density of the battery. However, the negative material layer 130 in Comparative Example 4 was only made of primary particles, and the defect value of the primary particles was higher, resulting in a higher defect value of the hard carbon material. In this way, there were too many side reactions between the negative electrode plate 100 and the electrolytic solution 300, increasing the consumption of active ions and reducing the first-cycle discharge efficiency. Thus, the energy density of the battery in Comparative Example 4 was also low.

Specifically, please refer to Tables 1 and 2 for the porosities P of the negative material layers 130 and the corresponding electrochemical performance of the batteries 20 described in Examples 5 and 2. The values of the porosities P of the negative material layers 130 in Examples 5 and 2 were 0.27 and 0.36, respectively.

In Example 5, the value of the porosity P of the negative material layer 130 was smaller than 0.32, the wetting performance and the liquid retention capacity of the electrolytic solution 300 in the negative electrode plate 100 were slightly poor, increasing the transport resistance of active ions. The charge-discharge performance of the battery 20 was slightly poor, and there was slight sodium precipitation phenomenon during the test. The moderate value of the porosity P of the negative material layer 130 in Example 2 can improve the wetting performance and liquid retention capacity of the electrolytic solution 300 in the negative electrode plate 100 and thus reduce the transport resistance of active ions, such that the negative electrode plate 100 had better dynamic performance. Further, the negative electrode plate 100 had no excessive side reactions with the electrolytic solution 300 during formation and cycling, thereby preventing shortening of the cycle life of the battery 20. Therefore the battery in Example 2 simultaneously had high energy density, high first-cycle discharge efficiency, and better cycling performance.

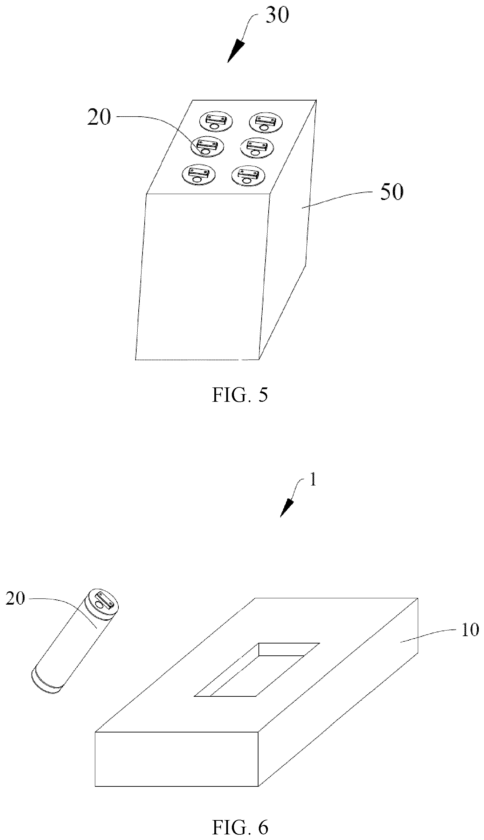

Referring to FIG. 5, embodiments of the present disclosure also provide a battery pack 30 including a case 50 and a plurality of the batteries provided in the embodiments of the present disclosure. The plurality of batteries are accommodated in the case 50, and the plurality of batteries are connected in at least one of series connection or parallel connection. The battery pack 30 has a fixing and protecting function on the batteries 20. Furthermore, the battery pack 30 has a relatively high energy density and a relatively high first-cycle efficiency, while having relatively high cycle performance and safety performance.

Referring to FIG. 6, an embodiment of the present disclosure also provides a electrical device 1 including an electrical device body 10 and the battery 20 provided in the embodiments of the present disclosure, and the electrical device body 10 includes a device positive electrode and a device negative electrode. A positive electrode plate 200 of the battery 20 is configured to be electrically connected to the device positive electrode of the electrical device body. A negative electrode plate 100 of the battery 20 is configured to be electrically connected to the device negative electrode of the electrical device body 10. The battery 30 is configured to supply power to the electrical device body 10. The battery 20 has high energy density and high first-cycle efficiency, as well as high cycling performance and safety performance, and can provide stable and safe electrical energy for the electrical device 1.

The electrical device 1 of the present disclosure may be, but is not limited to, an electronic device, such as a mobile phone, a tablet computer, a notebook computer, a desktop computer, a smart bracelet, a smartwatch, and an electronic reader.

It may be understood that the electrical device described in this embodiment is merely one aspect of the electrical device to which the battery is applied, and should not be construed as limitation to the electrical device provided herein, nor should it be construed as limitation to the batteries provided herein in various embodiments.

Reference in the application to "an example" or "an embodiment" means that a particular feature, structure, or characteristic described in connection with the embodiment may be included in at least one embodiment of the application. The appearances of the phrase in various places in the specification are not necessarily all referring to the same embodiment, nor are separate or alternative embodiments mutually exclusive of other embodiments. It is to be expressly and implicitly understood by those skilled in the art that the embodiments described in the present disclosure may be combined with other embodiments. Furthermore, it should be understood that the features, structures, or characteristics described in connection with the embodiments of the present disclosure may be combined in any combination without departing from the spirit and scope of the embodiments of the present disclosure.

## Claims

1. A negative electrode plate (100), comprising:
a negative current collector (110); and
a negative material layer (130) disposed on a surface of the negative current collector (110), the negative material layer (130) comprising a hard carbon material, the hard carbon material containing primary particles and secondary particles, and the primary particles having a defect value different from a defect value of the secondary particles,
wherein the defect value of the primary particles is G1, G1 satisfying G1=ID1/(ID1+IG1), where ID1 represents an intensity of D peak at a wavelength of 1350 cm⁻¹ indicating a defect of carbon atom lattice in a Raman spectrum of the primary particles, and IG1 represents an intensity of G peak at a wavelength of 1585 cm⁻¹ indicating an in-plane stretching vibration of sp2 hybridization of carbon atom in a Raman spectrum of the primary particles,
wherein the defect value of the secondary particles is G2, G2 satisfying G2=ID2/(ID2+IG2), where ID2 represents an intensity of D peak at a wavelength of 1350 cm⁻¹ indicating a defect of carbon atom lattice in a Raman spectrum of the secondary particles, and IG2 represents an intensity of G peak at a wavelength of 1585 cm⁻¹ indicating an in-plane stretching vibration of sp2 hybridization of carbon atom in a Raman spectrum of the secondary particle,
wherein 0.04≤|G1-G2|≤0.2,
wherein the defect value G1 of the primary particles is in a range of 0.5 to 0.8,
wherein the defect value G2 of the secondary particles is in the range of 0.5 to 0.8, and
wherein a specific surface area SSA of the hard carbon material satisfies 1.3 m²·g⁻¹ ≤SSA≤6 m²·g⁻¹, measured by a gas adsorption BET method according to GB/T 19587-2017/ISO 9277:2010.

2. The negative electrode plate (100) according to claim 1, wherein a number content N of the primary particles in the negative material layer (130) is in a value range of 0.1 to 0.9,
wherein the number content N is calculated based on N=n1/(n1+n2) by counting the number n1 of the primary particles and the number n2 of the secondary particles in a scanning electron micrograph of the hard carbon material.

3. The negative electrode plate (100) according to claim 1, wherein a porosity P of the negative material layer (130) is in a value range of 0.32 to 0.4, measured by a mercury intrusion method according to GB/T 21650.1-2008/ISO 15901-1, 2005.

4. The negative electrode plate (100) according to claim 1, wherein a performance factor h of the negative electrode plate (100) satisfies a relationship of h=[N×G1+(1-N)×G2]×SSA×P, where 0.2 ≤ h ≤ 1.8; wherein:
N is a number content of the primary particles in the negative material layer (130), wherein the number content N is calculated based on N=n1/(n1+n2) by counting the number n1 of the primary particles and the number n2 of the secondary particles in a scanning electron micrograph of the hard carbon material; and
P is a porosity of the negative material layer (130), measured by a mercury intrusion method according to GB/T 21650.1-2008/ISO 15901-1, 2005.

5. A battery (20), comprising:
an electrolytic solution (300);
a positive electrode plate (200) at least partially immersed in the electrolytic solution (300);
a separator (400) provided on a side of the positive electrode plate (200) and at least partially immersed in the electrolytic solution (300); and
the negative electrode plate (100) according to any one of claims 1 to 4, the negative electrode plate (100) being disposed on a side of the separator (400) facing away from the positive electrode plate (200) and at least partially immersed in the electrolytic solution (300).

6. A battery pack (30), comprising:
a case (50); and
a plurality of the batteries according to claim 5, the plurality of batteries being accommodated in the case (50), and the plurality of batteries being connected in at least one of series connection or parallel connection.

7. An electrical device (1), comprising:
an electrical device body (10) comprising a device positive electrode and a device negative electrode; and
the battery (20) according to claim 5,
wherein the positive electrode plate (200) of the battery (20) is used to electrically connected to the device positive electrode of the electrical device body (10), the negative electrode plate (100) of the battery (20) is used to electrically connected to the device negative electrode of the electrical device body (10), and the battery pack (30) is used to provide power to the electrical device body (10).

## Patentansprüche

1. Negative Elektrodenplatte (100), umfassend:
einen negativer Stromkollektor (110); und
eine negative Materialschicht (130), die auf einer Oberfläche des negativen Stromkollektors (110) angeordnet ist, wobei die negative Materialschicht (130) ein Hartkohlenstoffmaterial umfasst, wobei das Hartkohlenstoffmaterial Primärpartikel und Sekundärpartikel enthält, wobei die Primärpartikel einen Defektwert aufweisen, der sich von einem Defektwert der Sekundärpartikel unterscheidet,
wobei der Defektwert der Primärpartikel G1 ist, wobei G1 Folgendes erfüllt:
G1 = ID1/(ID1 + IG1), wobei ID1 eine Intensität eines D-Peaks bei einer Wellenzahl von 1350 cm⁻¹ darstellt, der einen Defekt eines Kohlenstoffatomgitters in einem Raman-Spektrum der Primärpartikel angibt, und wobei IG1 eine Intensität eines G-Peaks bei einer Wellenzahl von 1585 cm⁻¹ darstellt, der eine In-Plane-Streckschwingung einer sp²-Hybridisierung eines Kohlenstoffatoms in einem Raman-Spektrum der Primärpartikel angibt,
wobei der Defektwert der Sekundärpartikel G2 ist, wobei G2 Folgendes erfüllt: G2 = ID2/(ID2 + IG2), wobei ID2 eine Intensität eines D-Peaks bei einer Wellenzahl von 1350 cm⁻¹ darstellt, der einen Defekt eines Kohlenstoffatomgitters in einem Raman-Spektrum der Sekundärpartikel angibt, und wobei IG2 eine Intensität eines G-Peaks bei einer Wellenzahl von 1585 cm⁻¹ darstellt, der eine In-Plane-Streckschwingung einer sp²-Hybridisierung eines Kohlenstoffatoms in einem Raman-Spektrum der Sekundärpartikel angibt,
wobei 0,04 ≤ |G1-G2| ≤ 0,2,
wobei der Defektwert G1 der Primärpartikel in einem Bereich von 0,5 bis 0,8 liegt,
wobei der Defektwert G2 der Sekundärpartikel in dem Bereich von 0,5 bis 0,8 liegt, und
wobei eine spezifische Oberfläche SSA des Hartkohlenstoffmaterials 1,3 m²·g⁻¹ ≤ SSA ≤ 6 m²·g⁻¹ erfüllt, gemessen durch ein Gasadsorptions-BET-Verfahren gemäß GB/T 19587-2017/ISO 9277:2010.

2. Negative Elektrodenplatte (100) nach Anspruch 1, wobei ein Anzahlanteil N der Primärpartikel in der negativen Materialschicht (130) in einem Wertebereich von 0,1 bis 0,9 liegt,
wobei der Anzahlanteil N auf Grundlage von N = n1/(n1+n2) berechnet wird, indem die Anzahl n1 der Primärpartikel und die Anzahl n2 der Sekundärpartikel in einer Rasterelektronenmikroaufnahme des Hartkohlenstoffmaterials gezählt werden.

3. Negative Elektrodenplatte (100) nach Anspruch 1, wobei eine Porosität P der negativen Materialschicht (130) in einem Wertebereich von 0,32 bis 0,4 liegt, gemessen durch ein Quecksilberintrusionsverfahren gemäß GB/T 21650.1-2008/ISO 15901-1, 2005.

4. Negative Elektrodenplatte (100) nach Anspruch 1, wobei ein Performancefaktor h der negativen Elektrodenplatte (100) eine Beziehung h = [N×G1 + (1-N)×G2]×SSA×P erfüllt, wobei 0,2 ≤ h ≤ 1,8 gilt; wobei:
N ein Anzahlanteil der Primärpartikel in der negativen Materialschicht (130) ist, wobei der Anzahlanteil N auf Grundlage von N = n1/(n1+n2) berechnet wird, indem die Anzahl n1 der Primärpartikel und die Anzahl n2 der Sekundärpartikel in einer Rasterelektronenmikroaufnahme des Hartkohlenstoffmaterials gezählt werden; und
P eine Porosität der negativen Materialschicht (130) ist, gemessen durch ein Quecksilberintrusionsverfahren gemäß GB/T 21650.1-2008/ISO 15901-1, 2005.

5. Batterie (20), umfassend:
eine Elektrolytlösung (300);
eine positive Elektrodenplatte (200), die zumindest teilweise in die Elektrolytlösung (300) eingetaucht ist;
einen Separator (400), der an einer Seite der positiven Elektrodenplatte (200) angeordnet und zumindest teilweise in die Elektrolytlösung (300) eingetaucht ist; und
die negative Elektrodenplatte (100) nach einem der Ansprüche 1 bis 4, wobei die negative Elektrodenplatte (100) auf einer von der positiven Elektrodenplatte (200) abgewandten Seite des Separators (400) angeordnet ist und zumindest teilweise in die Elektrolytlösung (300) eingetaucht ist.

6. Batteriepack (30), umfassend:
ein Gehäuse (50); und
eine Vielzahl der Batterien nach Anspruch 5, wobei die Vielzahl der Batterien in dem Gehäuse (50) aufgenommen ist und die Vielzahl der Batterien in Reihenschaltung und/oder Parallelschaltung verbunden ist.

7. Elektrische Vorrichtung (1), umfassend:
einen Vorrichtungskörper (10), der eine positive Vorrichtungselektrode und eine negative Vorrichtungselektrode umfasst; und
die Batterie (20) nach Anspruch 5,
wobei die positive Elektrodenplatte (200) der Batterie (20) dazu eingerichtet ist, mit der positiven Vorrichtungselektrode des Vorrichtungskörpers (10) elektrisch verbunden zu werden, die negative Elektrodenplatte (100) der Batterie (20) dazu eingerichtet ist, mit der negativen Vorrichtungselektrode des Vorrichtungskörpers (10) elektrisch verbunden zu werden, und der Batteriepack (30) dazu verwendet wird, den Vorrichtungskörpers (10) mit Strom zu versorgen.

## Revendications

1. Une plaque d'électrode négative (100), comprenant :
un collecteur de courant négatif (110) ; et
une couche de matériau négatif (130) disposée sur une surface du collecteur de courant négatif (110), la couche de matériau négatif (130) comprenant un matériau en carbone dur, le matériau en carbone dur contenant des particules primaires et des particules secondaires, et les particules primaires ayant une valeur de défaut différente d'une valeur de défaut des particules secondaires,
dans laquelle la valeur de défaut des particules primaires est G1, G1 satisfaisant G1=ID1/(ID1+IG1), où ID1 représente une intensité de pic D à une longueur d'onde de 1350 cm⁻¹ indiquant un défaut de réseau d'atomes de carbone dans un spectre Raman des particules primaires, et IG1 représente une intensité de pic G à une longueur d'onde de 1585 cm⁻¹ indiquant une vibration d'élongation dans le plan de l'hybridation sp2 de l'atome de carbone dans un spectre Raman des particules primaires,
dans laquelle la valeur de défaut des particules secondaires est G2, G2 satisfaisant G2=ID2/(ID2+IG2), où ID2 représente une intensité de pic D à une longueur d'onde de 1350 cm⁻¹ indiquant un défaut de réseau d'atomes de carbone dans un spectre Raman des particules secondaires, et IG2 représente une intensité de pic G à une longueur d'onde de 1585 cm⁻¹ indiquant une vibration d'élongation dans le plan de l'hybridation sp2 de l'atome de carbone dans un spectre Raman de la particule secondaire,
dans laquelle 0,04≤|G1-G2|≤0,2,
dans laquelle la valeur de défaut G1 des particules primaires est dans une plage de 0,5 à 0,8,
dans laquelle la valeur de défaut G2 des particules secondaires est dans la plage de 0,5 à 0,8, et
dans laquelle une surface spécifique SSA du matériau en carbone dur satisfait 1,3 m²·g⁻¹ ≤SSA≤6 m²·g⁻¹, mesurée par une méthode BET d'adsorption de gaz selon GB/T 19587-2017/ISO 9277:2010.

2. La plaque d'électrode négative (100) selon la revendication 1, dans laquelle une teneur en nombre N des particules primaires dans la couche de matériau négatif (130) est dans une plage de valeurs de 0,1 à 0,9,
dans laquelle la teneur en nombre N est calculée sur la base de N=n1/(n1+n2) en comptant le nombre n1 des particules primaires et le nombre n2 des particules secondaires dans une micrographie électronique à balayage du matériau en carbone dur.

3. La plaque d'électrode négative (100) selon la revendication 1, dans laquelle une porosité P de la couche de matériau négatif (130) est dans une plage de valeurs de 0,32 à 0,4, mesurée par une méthode d'intrusion de mercure selon GB/T 21650.1-2008/ISO 15901-1, 2005.

4. La plaque d'électrode négative (100) selon la revendication 1, dans laquelle un facteur de performance h de la plaque d'électrode négative (100) satisfait une relation de h=[N×G1+(1-N)×G2]×SSA×P, où 0,2 ≤ h ≤ 1,8 ; dans laquelle :
N est une teneur en nombre des particules primaires dans la couche de matériau négatif (130), dans laquelle la teneur en nombre N est calculée sur la base de N=n1/(n1+n2) en comptant le nombre n1 des particules primaires et le nombre n2 des particules secondaires dans une micrographie électronique à balayage du matériau en carbone dur ; et
P est une porosité de la couche de matériau négatif (130), mesurée par une méthode d'intrusion de mercure selon GB/T 21650.1-2008/ISO 15901-1, 2005.

5. Une batterie (20), comprenant :
une solution électrolytique (300) ;
une plaque d'électrode positive (200) au moins partiellement immergée dans la solution électrolytique (300) ;
un séparateur (400) prévu sur un côté de la plaque d'électrode positive (200) et au moins partiellement immergé dans la solution électrolytique (300) ; et
la plaque d'électrode négative (100) selon l'une quelconque des revendications 1 à 4, la plaque d'électrode négative (100) étant disposée sur un côté du séparateur (400) orienté à l'opposé de la plaque d'électrode positive (200) et au moins partiellement immergée dans la solution électrolytique (300).

6. Un bloc-batterie (30), comprenant :
un boîtier (50) ; et
une pluralité des batteries selon la revendication 5, la pluralité de batteries étant logées dans le boîtier (50), et la pluralité de batteries étant connectées selon au moins l'une d'une connexion en série ou d'une connexion en parallèle.

7. Un dispositif électrique (1), comprenant :
un corps de dispositif électrique (10) comprenant une électrode positive de dispositif et une électrode négative de dispositif ; et
la batterie (20) selon la revendication 5,
dans lequel la plaque d'électrode positive (200) de la batterie (20) est utilisée pour se connecter électriquement à l'électrode positive de dispositif du corps de dispositif électrique (10), la plaque d'électrode négative (100) de la batterie (20) est utilisée pour se connecter électriquement à l'électrode négative de dispositif du corps de dispositif électrique (10), et le bloc-batterie (30) est utilisé pour fournir de l'énergie au corps de dispositif électrique (10).
